# FASCICULE DE BREVET EUROPEEN

(11) **EP 3 122 006 B1**
(45) Date de publication et mention de la délivrance du brevet: **18.04.2018**
(21) Numéro de dépôt: 16179888.9
(22) Date de dépôt: 18.07.2016
(51) Int. Cl.: H04L 12/721, H04L 12/24, H04B 3/54, H04L 12/753

(54) **PROCEDE DE SELECTION DE DISPOSITIF NOEUD PARENT DANS UN RESEAU DE COMMUNICATION SOUS FORME D'ARBRE**
VERFAHREN ZUR AUSWAHL EINER ELTERNKNOTEN-VORRICHTUNG IN EINEM BAUMFÖRMIGEN KOMMUNIKATIONSNETZ
METHOD FOR SELECTING A PARENT NODE DEVICE IN A TREE-SHAPED COMMUNICATION NETWORK

(30) Priorité: 24.07.2015 FR 1557076
(43) Date de publication de la demande: 25.01.2017
(73) Titulaire: SAGEMCOM ENERGY & TELECOM SAS, 92500 Rueil-Malmaison (FR)
(72) Inventeur: TEBOULLE, Henri, 92500 Rueil Malmaison (FR); SERGI, Jérémie, 92500 Rueil Malmaison (FR); MORO, Paolo, 92500 Rueil Malmaison (FR)
(74) Mandataire: Le Guen-Maillet

(56) Documents cités:
- WO-A1-2015/103534
- US-A1- 2015 023 174
- US-A1- 2015 188 801

## Description

La présente invention concerne une sélection de dispositif noeud parent dans un réseau de communication, sous forme d'arbre de dispositifs noeuds, implémenté sur un réseau d'alimentation électrique.

Les communications par courants porteurs en ligne PLC (« PowerLine Communications » en anglais) se développent, notamment dans le cadre des réseaux d'alimentation électrique de type AMM (« Automated Meter Management » en anglais). Des réseaux de communication sont ainsi implémentés au dessus de réseaux d'alimentation électrique pour la collecte automatisée, auprès de compteurs électriques intelligents (« smart electricity meters » en anglais), de données de relevés de consommation énergétique d'installations électriques que lesdits compteurs électriques intelligents sont respectivement en charge de surveiller.

De tels réseaux de communication peuvent avoir une forme d'arbre pour permettre d'étendre la portée des communications. C'est le cas par exemple dans les spécifications PRIME (« PoweRline Intelligent Metering Evolution » en anglais). Les dispositifs d'un tel réseau de communication sont généralement appelés *noeuds.* Un dispositif noeud tient le rôle de racine du réseau de communication et gère le réseau de communication de manière à organiser le partage d'un même support de communication : émission de balises de synchronisation, gestion de topologie,... Des dispositifs noeuds servent alors de relais pour le compte d'autres dispositifs noeuds du réseau de communication, lorsque ces derniers n'arrivent pas à recevoir directement des informations du dispositif noeud racine et à transmettre directement des informations au dispositif noeud racine. On dit alors que le réseau de communication est hiérarchisé. Dans les spécifications PRIME, un dispositif concentrateur de données (« data concentrator » en anglais), parfois appelé *noeud de base* (« base node » en anglais) a le rôle de dispositif noeud racine, et des compteurs électriques, appelés *noeuds commutateurs* (« switch node » en anglais), prennent le rôle de relais entre le dispositif concentrateur de données et d'autres compteurs électriques, appelés *noeuds terminaux* (« terminal node » en anglais). Plusieurs relais peuvent ainsi être nécessaires pour permettre à un dispositif noeud terminal de communiquer avec le dispositif noeud racine. Un premier dispositif noeud servant de relais pour le compte d'un second dispositif noeud est qualifié de *parent,* alors que, dans cette relation inter-noeud, le second dispositif noeud est qualifié d'*enfant.* On dit aussi que le second dispositif noeud est rattaché au premier dispositif noeud.

A cause notamment des phénomènes de diaphonie et autres interférences, des dispositifs noeuds peuvent se trouver déconnectés du réseau de communication par courants porteurs en ligne PLC auquel ils appartenaient et cherchent alors à se reconnecter audit réseau de communication. La diaphonie est un phénomène qui permet à des signaux, typiquement par couplage capacitif, de se propager sans passer par des paires de cuivre proprement dites, mais par des liens parasites non visibles. Les phénomènes de diaphonie sont instables dans le temps, car pouvant varier en fonction de la température ou de l'activité sur ledit réseau de communication. A noter qu'il peut également des phénomènes de diaphonie au sein d'un même appareil, via des liaisons cuivre sur circuits imprimés et/ou via certains composants qui constituent ledit appareil. Lorsqu'un dispositif noeud est déconnecté du réseau de communication par courants porteurs en ligne PLC auquel ils appartenait, il peut se passer un laps de temps significatif avant que ledit dispositif noeud ne puisse profiter à nouveau pleinement des possibilités de communication offertes par ledit réseau de communication.

Il est connu le document de brevet US 2015/023174 A1 dans lequel est décrit un mécanisme utilisant des valeurs statistiques et historiques de métriques de performance pour influencer des décisions de routage dans un réseau contraint. Le niveau de service du trafic est constamment surveillé et comparé à un niveau de service accordé. Si un écart existe, des métriques de stabilité sont utilisées pour maintenir des chemins à travers le réseau qui répondent au niveau de service accordé. Le mécanisme prévoit de sélectionner un noeud parent de secours sur la base de performances antérieures des noeuds pouvant prendre le rôle de noeud parent.

Il est connu le document de brevet WO 2015/103534 A1 dans lequel est décrit un mécanisme de collecte et d'analyse de métriques réseau de manière à apprendre si une défaillance réseau est susceptible de se produire. En réponse à une prédiction de défaillance réseau, un re-routage du trafic dans le réseau est effectué.

Il est donc souhaitable d'éviter que les dispositifs noeuds du réseau de communication ne se retrouvent déconnectés dudit réseau de communication par courants porteurs en ligne PLC auquel ils appartiennent.

Il est aussi souhaitable de fournir une solution qui permette à un dispositif noeud d'un tel réseau de communication de se rattacher à un dispositif noeud parent qui permette d'assurer une stabilité dans le temps de la hiérarchie du réseau de communication.

La présente invention concerne un procédé pour sélectionner un dispositif noeud parent dans un réseau de communication sous forme d'arbre implémenté sur un réseau d'alimentation électrique, des dispositifs noeuds pouvant être relais entre un dispositif noeud racine de l'arbre et d'autres dispositifs noeuds qui leur sont respectivement rattachés. Le procédé est tel qu'au moins un premier dispositif noeud obtient des connaissances statistiques de qualité de transmission entre ledit dispositif noeud et chaque second dispositif noeud pouvant prendre un rôle de dispositif noeud parent pour ledit premier dispositif noeud au sein du réseau de communication, lesdites connaissances statistiques étant organisées selon une découpe du temps en périodes calendaires. De plus, le procédé est tel que ledit premier dispositif noeud implémente un mécanisme de surveillance calendaire de telle sorte que, pour chaque basculement vers une nouvelle période calendaire, ledit premier dispositif noeud effectue les étapes suivantes : vérifier, en fonction des données statistiques obtenues, si des perturbations de transmission au-delà d'un premier seuil prédéfini sont envisagées entre ledit premier dispositif noeud et le dispositif noeud parent auquel ledit premier dispositif noeud est rattaché dans ledit réseau de communication ; et sélectionner, en cas de vérification positive, un autre dispositif noeud parent auquel rattacher ledit premier dispositif noeud pour ladite nouvelle période calendaire. Ainsi, grâce à l'utilisation de statistiques organisées par période calendaire, il est possible d'anticiper des perturbations que le premier dispositif noeud est susceptible de subir pendant ladite nouvelle période calendaire, et de sélectionner un dispositif noeud parent qui permette d'assurer une stabilité dans le temps de la hiérarchie du réseau de communication.

Selon un mode de réalisation particulier, le premier dispositif noeud débraye le mécanisme de surveillance calendaire lorsque ledit premier dispositif noeud joue le rôle de relais entre le dispositif noeud racine de l'arbre et au moins un autre dispositif noeud du réseau de communication.

Selon un mode de réalisation particulier, ledit premier dispositif noeud obtient lesdites connaissances statistiques en collectant, au fil desdites périodes calendaires, des informations de qualité de transmission entre ledit premier dispositif noeud et chaque second dispositif noeud pouvant prendre un rôle de dispositif noeud parent pour ledit premier dispositif noeud au sein du réseau de communication.

Selon un mode de réalisation particulier, ledit autre dispositif noeud parent est le second dispositif noeud pour lequel les informations de qualité de transmission avec ledit premier dispositif noeud, dans lesdites connaissances statistiques pour ladite nouvelle période calendaire, montrent la meilleure qualité de transmission parmi les informations de qualité de transmission les plus récentes vis-à-vis desdits seconds dispositifs noeuds.

Selon un mode de réalisation particulier, ledit autre dispositif noeud parent est le second dispositif noeud pour lequel les informations de qualité de transmission avec ledit premier dispositif noeud montrent la meilleure qualité de transmission parmi les informations de qualité de transmission les plus récentes vis-à-vis desdits seconds dispositifs noeuds.

Selon un mode de réalisation particulier, les informations de qualité de transmission sont des information de niveau de réception de signaux et des informations de qualité de réception de signaux, et ledit premier dispositif noeud effectue les étapes suivantes : comparer chaque information de niveau de réception, obtenue vis-à-vis de chacun desdits seconds dispositifs noeuds, avec un second seuil prédéfini ; exclure, d'une liste de dispositifs noeuds parents possibles, chaque second dispositif noeud pour lequel le niveau de réception par ledit second dispositif noeud de signaux émis par le premier dispositif noeud est inférieur au second seuil prédéfini et/ou pour lequel le niveau de réception par le premier dispositif noeud de signaux émis par ledit second dispositif noeud est inférieur au second seuil prédéfini ; déterminer, pour chaque second dispositif noeud restant dans ladite liste, le minimum MIN_Q_RX entre la qualité de réception par ledit second dispositif noeud desdits signaux émis par le premier dispositif noeud et la qualité de réception par le premier dispositif noeud de signaux émis par ledit second dispositif noeud ; et sélectionner comme autre dispositif noeud parent, parmi les seconds dispositifs noeuds restant dans ladite liste, le second dispositif noeud montrant la valeur MIN_Q_RX la plus élevée.

Selon un mode de réalisation particulier, le premier dispositif noeud implémente en outre un mécanisme de surveillance d'évolution des conditions de transmission avec le dispositif noeud parent auquel ledit dispositif noeud est rattaché ; vérifier, en fonction de l'évolution des conditions de transmission avec le dispositif noeud parent auquel ledit dispositif noeud est rattaché, si des perturbations de transmission au-delà d'un premier seuil prédéfini surviennent entre ledit premier dispositif noeud et le dispositif noeud parent auquel ledit premier dispositif noeud est rattaché ; et sélectionner, en cas de vérification positive, un autre dispositif noeud parent auquel rattacher ledit premier dispositif noeud.

Selon un mode de réalisation particulier, le mécanisme de surveillance d'évolution des conditions de transmission avec le dispositif noeud parent auquel ledit dispositif noeud est rattaché vérifie si la pente de l'évolution de perturbations entre ledit premier dispositif noeud et le dispositif noeud parent auquel ledit premier dispositif noeud est rattaché est supérieure à un troisième seuil, positif, prédéfini.

Selon un mode de réalisation particulier, le premier dispositif noeud sélectionne ledit autre dispositif noeud parent en envoyant une demande de réenregistrement dans ledit réseau de communication, ladite demande de réenregistrement ayant le même format qu'une demande d'enregistrement dans ledit réseau de communication envoyée lorsque le premier dispositif noeud est déconnecté du réseau de communication et cherche à s'y reconnecter, un champ permettant toutefois de préciser si la demande correspond à une demande d'enregistrement ou à une demande de réenregistrement.

Selon un mode de réalisation particulier, la demande de réenregistrement est un paquet de type REG conformément aux spécifications PRIME dont le bit de vagabondage REG.R précise si la demande correspond à une demande d'enregistrement ou à une demande de réenregistrement.

L'invention concerne également un dispositif noeud, dit premier dispositif noeud, adapté pour sélectionner un dispositif noeud parent dans un réseau de communication sous forme d'arbre implémenté sur un réseau d'alimentation électrique, des dispositifs noeuds pouvant être relais entre un dispositif noeud racine de l'arbre et d'autres dispositifs noeuds qui leur sont respectivement rattachés dans ledit réseau de communication. Le premier dispositif noeud comporte des moyens pour obtenir des connaissances statistiques de qualité de transmission entre ledit dispositif noeud et chaque second dispositif noeud pouvant prendre un rôle de dispositif noeud parent pour ledit premier dispositif noeud au sein du réseau de communication, lesdites connaissances statistiques étant organisées selon une découpe du temps en périodes calendaires. De plus, ledit premier dispositif noeud implémente un mécanisme de surveillance calendaire de telle sorte que, pour chaque basculement vers une nouvelle période calendaire, ledit premier dispositif noeud implémente : des moyens pour vérifier, en fonction des données statistiques obtenues, si des perturbations de transmission au-delà d'un premier seuil prédéfini sont envisagées entre ledit premier dispositif noeud et le dispositif noeud parent auquel ledit premier dispositif noeud est rattaché dans ledit réseau de communication ; et des moyens pour sélectionner, en cas de vérification positive, un autre dispositif noeud parent auquel rattacher ledit premier dispositif noeud pour ladite nouvelle période calendaire.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un réseau de communication par courants porteurs en ligne sous forme d'arbre, implémenté sur un réseau d'alimentation électrique, dans lequel l'invention peut être implémentée ;
- la Fig. 2 illustre schématiquement un exemple d'architecture matérielle d'un dispositif noeud du réseau de communication ;
- la Fig. 3 illustre schématiquement un algorithme, exécuté par au moins un dispositif noeud du réseau de communication, pour traiter un événement de détection de changement de topologie du réseau de communication ;
- la Fig. 4 illustre schématiquement un algorithme, exécuté par le(s)dit(s) dispositif(s) noeud(s), pour activer un mécanisme de surveillance ;
- la Fig. 5 illustre schématiquement un algorithme, exécuté par le(s)dit(s) dispositif(s) noeud(s), pour effectuer une surveillance calendaire dans le cadre du mécanisme de surveillance ;
- la Fig. 6 illustre schématiquement un algorithme, exécuté par le(s)dit(s) dispositif(s) noeud(s), pour collecter des données statistiques dans le cadre du mécanisme de surveillance ; et
- la Fig. 7 illustre schématiquement un algorithme, exécuté par le(s)dit(s) dispositif(s) noeud(s), pour traiter un événement de sélection de rattachement au sein du réseau de communication.

La description qui suit détaille la présente invention dans le cadre d'un réseau de communication en arbre qui est implémenté sur un réseau d'alimentation électrique, afin de mettre en oeuvre des services de type AMM, et qui repose plus particulièrement sur les spécifications PRIME (à l'exception d'échanges de messages et d'opérations de traitement, qui sont introduits dans le cadre de la présente invention). Il convient toutefois de noter que la présente invention s'applique à tout réseau de communication par courants porteurs en ligne PLC sous forme d'arbre (donc hiérarchisé) dont la structure (hiérarchie) est amenée à évoluer notamment en fonction d'interférences rencontrées au fil des transmissions.

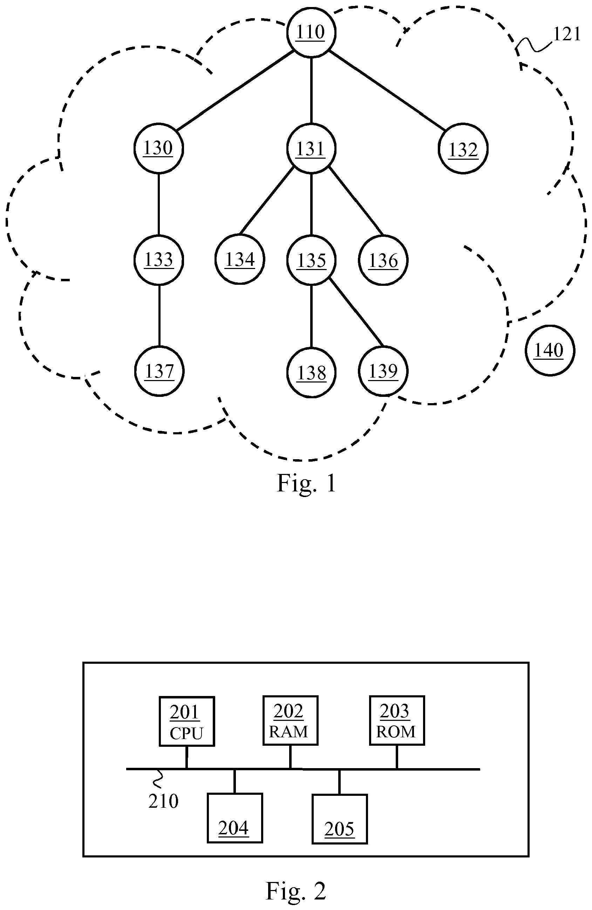

La Fig. 1 illustre schématiquement un réseau de communication 121, par courants porteurs en ligne PLC, sous forme d'arbre, qui est implémenté sur un réseau d'alimentation électrique, et dans lequel l'invention peut être mise en oeuvre.

Le réseau de communication 121 est en forme d'arbre dont un dispositif noeud particulier 110, appelé *dispositif concentrateur,* est la racine. Le dispositif concentrateur 110 est en charge de la gestion de la topologie du réseau de communication 121. Le réseau de communication 121 est ainsi hiérarchisé et est destiné à permettre de connecter une pluralité de dispositifs noeuds au dispositif concentrateur 110. Dans le cadre de la Fig. 1, les dispositifs noeuds que le réseau de communication 121 vise à connecter au dispositif concentrateur 110 sont des compteurs électriques intelligents. Le réseau de communication 121 permet ainsi d'établir des communications par courants porteurs en ligne PLC.

Etant donnée la portée des communications par courants porteurs en ligne PLC, des dispositifs noeuds, dits dispositifs noeuds commutateurs, jouent le rôle de relais entre des dispositifs noeuds, dits dispositif noeuds terminaux, (qui ne jouent pas le rôle de relais) et le dispositif concentrateur 110. Certaines communications entre des dispositifs noeuds terminaux et le dispositif concentrateur 110 peuvent nécessiter plusieurs relais successifs. Cela définit donc des rattachements de dispositifs noeuds les uns aux autres pour former l'arbre constituant le réseau de communication 121. Un dispositif noeud qui n'est pas rattaché au réseau de communication 121 est un dispositif déconnecté (« disconnected » en anglais).

Cette situation est présentée sur la Fig. 1. Un dispositif noeud terminal 132 est directement rattaché au dispositif concentrateur 110. Deux autres dispositifs noeuds 130 et 131 sont aussi directement rattachés au dispositif concentrateur 110. Ces deux dispositifs noeuds 130 et 131 jouent le rôle de relais entre le dispositif concentrateur 110 et d'autres dispositifs noeuds. Le dispositif noeud 130 joue le rôle de relais entre le dispositif concentrateur 110 et un dispositif noeud 133 qui, lui-même, joue le rôle de relais entre le dispositif noeud 130 et un dispositif noeud terminal 137. Les communications entre le dispositif concentrateur 110 et le dispositif noeud terminal 137 passent donc par deux relais successifs, à savoir les dispositifs noeuds relais 130 et 133. Le dispositif noeud 131 joue le rôle de relais entre le dispositif concentrateur 110 et trois autres dispositifs noeuds 134, 135 et 136. Les dispositifs noeuds 134 et 136 sont des dispositifs noeuds terminaux, et le dispositif noeud 135 joue le rôle de relais entre le dispositif noeud 131 et deux dispositifs noeuds terminaux 138 et 139. La Fig. 1 montre aussi un dispositif noeud 140, qui est un dispositif déconnecté.

Il faut comprendre que la topologie du réseau de communication 121 n'est pas figée. La Fig. 1 représente la topologie du réseau de communication 121 à un instant donné. A cause notamment des phénomènes de diaphonie et autres interférences, des dispositifs noeuds peuvent se trouver déconnectés du réseau de communication 121 et cherchent alors à se reconnecter au réseau de communication 121. La topologie du réseau de communication 121 après reconnexion est alors probablement différente de la topologie du réseau de communication 121 avant déconnexion. De plus, dans le cadre de la présente invention, la topologie du réseau de communication 121 peut être amenée à évoluer suite à des demandes de changement volontaire de rattachement de la part des dispositifs noeuds qui lui sont directement ou indirectement rattachés, tel que décrit ci-après. Le dispositif concentrateur 110 est alors en charge de faire évoluer la topologie du réseau de communication 121 en fonction des enregistrements de dispositifs noeuds dans le réseau de communication 121, des déconnexions de dispositifs noeuds du réseau de communication 121 et desdites demandes de changement volontaire de rattachement.

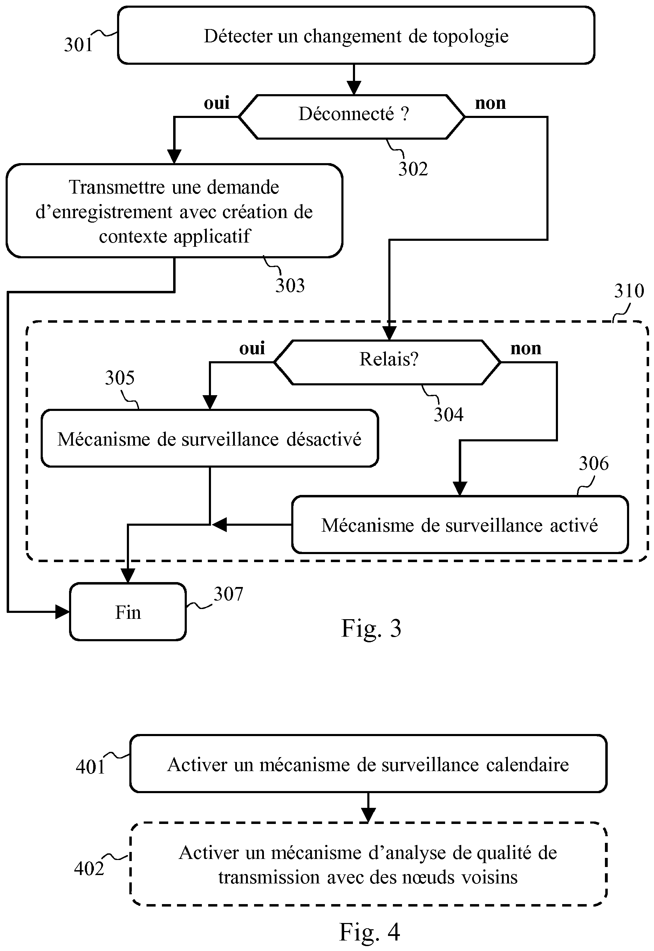

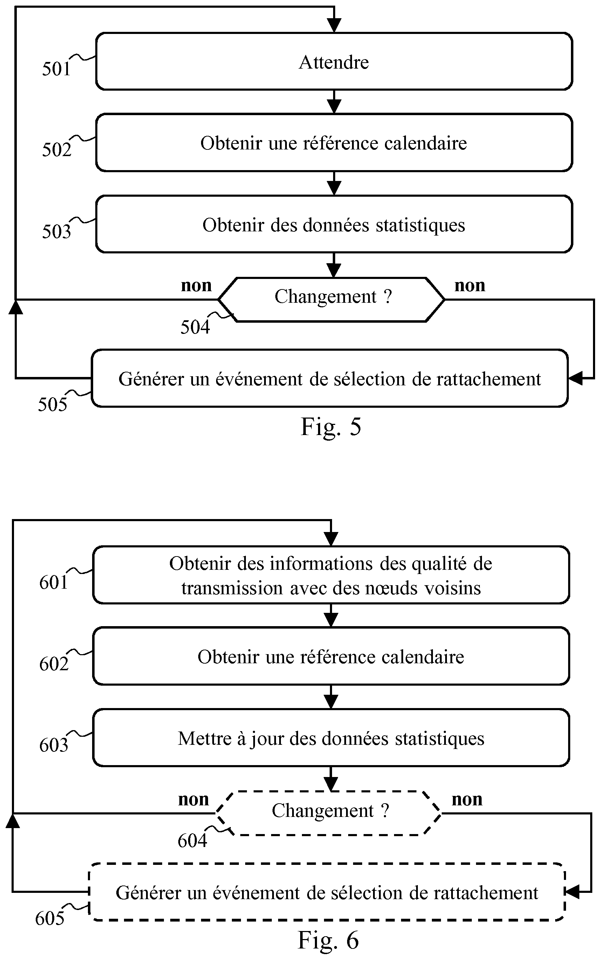

Pour permettre aux dispositifs noeuds de demander des changements volontaires de rattachement, un mécanisme de surveillance, préférentiellement débrayable, est mis en place, tel que décrit ci-après en relation avec les Figs. 3 à 7. Ce mécanisme de surveillance est basé sur des connaissances statistiques de qualité de transmission entre ledit dispositif noeud et ses dispositifs noeuds voisins. Les dispositifs noeuds voisins dudit dispositif noeud sont les dispositifs noeuds du réseau de communication 121 qui sont aptes à recevoir directement (donc sans relais) des signaux émis par ledit dispositif noeud et pour lesquels ledit dispositif noeud est apte à recevoir directement (donc sans relais) des signaux qu'ils émettent. Ces connaissances statistiques peuvent être préétablies ou évolutives au fur et à mesure du temps en fonction d'informations de qualité de transmission entre ledit dispositif noeud et ses dispositifs noeuds voisins. Dans ce dernier cas, un mécanisme d'analyse de qualité de transmission entre ledit dispositif noeud et ses dispositifs noeuds voisins est mis en place, tel que décrit ci-après en relation avec la Fig. 6.

Les communications dans le réseau de communication 121 s'effectuent préférentiellement sous la forme de trames décomposées en trois parties.

Une première partie de chaque trame est dédiée à l'émission périodique de balises (« beacons » en anglais). Ces balises contiennent des informations servant, entre autre, à la découverte et à la synchronisation du réseau de communication 121. Plusieurs intervalles de temps (« time slots » en anglais) sont définis dans ladite première partie de chaque trame : un intervalle de temps est dédié à l'émission de balises par le dispositif concentrateur 110, et les autres intervalles de temps sont dédiés à l'émission périodique de balises par les dispositifs noeuds commutateurs, afin de permettre aux dispositifs noeuds respectivement rattachés auxdits dispositifs noeuds commutateurs de se synchroniser. Le dispositif concentrateur 110 est en charge d'attribuer un intervalle de temps de ladite première partie de chaque trame (ainsi qu'une fréquence d'émission) à chaque dispositif noeud commutateur.

Une seconde partie de chaque trame est dédiée aux communications par tous les dispositifs noeuds du réseau de communication. Un mécanisme de type CSMA/CA (« Carrier Sense Multiple Access / Collision Avoidance » en anglais) est mis en oeuvre, sans option RTS/CTS (« Request-To-Send / Clear-To-Send » en anglais). Lorsqu'un dispositif noeud doit envoyer un paquet ou un message, ledit dispositif noeud détecte l'état d'occupation du support de communication (*i.e.* canal de transmission) et décide ou non d'envoyer le paquet ou le message en conséquence. Un délai aléatoire à appliquer indépendamment, depuis le début de ladite seconde partie de trame, par chaque dispositif noeud désireux d'émettre, permet de limiter le risque de collision.

Une troisième partie de chaque trame est dédiée aux communications par des dispositifs noeuds spécifiques du réseau de communication 121. On retrouve une telle troisième partie de trame dans les spécifications PRIME sous l'acronyme CFP (« Contention-Free Period » en anglais).

Les messages auxquels il est fait référence dans la suite du document sont ainsi échangés sous forme de paquets dans la seconde partie de trame, par application du mécanisme de type CSMA/CA. Ces messages reposent préférentiellement sur un format de paquet, compatible avec les spécifications PRIME.

La Fig. 2 illustre schématiquement un exemple d'architecture matérielle d'un dispositif noeud du réseau de communication 121, que ce soit le dispositif concentrateur 110, un dispositif noeud commutateur ou un dispositif noeud terminal.

Considérons à titre illustratif que la Fig. 2 représente schématiquement l'architecture du dispositif noeud terminal 137. Le dispositif noeud terminal 137 comprend alors, reliés par un bus de communication 210 : un processeur ou CPU (« Central Processing Unit» en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ; une interface d'émission-réception (« transceiver interface » en anglais) 205 de signaux courants porteurs en ligne PLC, permettant au dispositif noeud terminal 137 de communiquer au sein du réseau de communication 121.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif noeud terminal 137 est mis sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ci-après.

Tout ou partie des algorithmes et étapes décrits ci-après peut être implémenté sous forme logicielle par exécution d'un ensemble d'instructions par une machine programmable, par exemple un processeur, un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 3 illustre schématiquement un algorithme, exécuté par au moins un dispositif noeud du réseau de communication (à l'exception du dispositif concentrateur 110), pour traiter un événement de détection de changement de topologie du réseau de communication.

Dans une étape 301, ledit dispositif noeud détecte un événement de changement de topologie. Ledit dispositif noeud peut recevoir cet événement de la part du dispositif concentrateur 110 via le dispositif noeud parent auquel ledit dispositif noeud est potentiellement rattaché (ledit dispositif noeud pouvant être rattaché directement au dispositif concentrateur 110). Ledit dispositif noeud peut recevoir cet événement, d'une manière générale, en provenance du dispositif noeud parent auquel ledit dispositif noeud est potentiellement rattaché. Ledit dispositif noeud peut recevoir cet événement en interne, *e.g.* détection de déconnexion du réseau de communication 121.

Dans une étape 302 suivante, ledit dispositif noeud vérifie si ledit dispositif noeud a été déconnecté du réseau de communication 121. Si tel est le cas, une étape 303 est effectuée ; sinon, une étape 304 est effectuée.

Dans l'étape 303, ledit dispositif noeud transmet une demande d'enregistrement au sein du réseau de communication 121. La demande d'enregistrement requiert qu'un contexte applicatif soit créé par le dispositif concentrateur 110 pour ledit dispositif noeud. Ce contexte applicatif permet audit dispositif noeud de fournir au dispositif concentrateur 110 des informations, notamment de relevé de consommation énergétique de l'installation électrique que ledit compteur électrique intelligent constituant ledit dispositif noeud est en charge de superviser. Ce contexte applicatif permet aussi au dispositif concentrateur 110 de transmettre des commandes audit compteur électrique intelligent. Le processus d'enregistrement se poursuit avec potentiellement d'autres échanges impliquant ledit dispositif noeud pour finaliser l'enregistrement dudit dispositif noeud au sein du réseau de communication 121. Ensuite, une étape 307 est effectuée, dans laquelle il est mis fin à l'algorithme de la Fig. 3.

Dans l'étape 304, ledit dispositif noeud vérifie si ledit dispositif noeud joue le rôle de relais dans la hiérarchie du réseau de communication 121 en forme d'arbre, *i.e.* le dispositif noeud vérifie si ledit dispositif noeud est un dispositif noeud commutateur. Si tel est le cas, une étape 305 est effectuée ; sinon, une étape 306 est effectuée.

Dans l'étape 305, ledit dispositif noeud désactive le mécanisme de surveillance. Ledit dispositif noeud peut toutefois maintenir actif le mécanisme d'analyse de qualité de transmission entre ledit dispositif noeud et ses dispositifs noeuds voisins, de manière à faire évoluer les connaissances statistiques sur lesquelles se base le mécanisme de surveillance. Ensuite, l'étape 307 est effectuée.

Dans l'étape 306, ledit dispositif noeud active le mécanisme de surveillance tel que décrit ci-après en relation avec la Fig. 4. Ensuite, l'étape 307 est effectuée.

Les étapes 304, 305 et 306 forment un ensemble d'étapes 310, qui est optionnel. Ne pas activer le mécanisme de surveillance lorsque le dispositif noeud joue le rôle de relais dans la hiérarchie du réseau de communication 121 en forme d'arbre permet d'éviter que tous les dispositifs noeuds qui lui sont directement ou indirectement rattachés n'aient à risquer d'être déconnectés du réseau de communication 121 lorsque ledit dispositif noeud décide de changer volontairement de rattachement au sein du réseau de communication 121 pour anticiper des perturbations pouvant mener à une déconnexion dudit dispositif noeud. Cela dépend du comportement du dispositif concentrateur 110 vis-à-vis des enregistrements de dispositifs noeuds au sein du réseau de communication 121. Si le dispositif concentrateur 110 est adapté pour accepter que la hiérarchie du réseau de communication 121 soit modifiée par branche, c'est-à-dire que le dispositif concentrateur 110 accepte que tous les rattachements directs ou indirects existant envers ledit dispositif noeud soient maintenus malgré le changement de rattachement dudit dispositif noeud lui-même, alors le mécanisme de surveillance peut être activé indépendamment du fait que ledit dispositif noeud soit un dispositif noeud terminal ou un dispositif noeud commutateur. Si le dispositif concentrateur 110 n'est pas adapté pour accepter que la hiérarchie du réseau de communication 121 soit modifiée par branche, alors il est avantageux de n'activer le mécanisme de surveillance que lorsque ledit dispositif noeud ne joue pas le rôle de relais dans la hiérarchie du réseau de communication 121 en forme d'arbre.

En variante de réalisation, l'ensemble d'étapes 310 n'est pas implémenté, et le mécanisme de surveillance est activé en permanence.

La Fig. 4 illustre schématiquement un algorithme, exécuté par au moins un dispositif noeud du réseau de communication (à l'exception du dispositif concentrateur 110), pour activer le mécanisme de surveillance.

Dans une étape 401, ledit dispositif noeud active un mécanisme de surveillance calendaire. Ce mécanisme de surveillance calendaire permet d'anticiper des perturbations de communication, en fonction de connaissances statistiques à la disposition dudit dispositif noeud. Le mécanisme de surveillance calendaire est décrit après-en relation avec la Fig. 5.

Dans une étape 402 optionnelle, ledit dispositif noeud active le mécanisme d'analyse de qualité de transmission entre ledit dispositif noeud et ses dispositifs noeuds voisins. Cela permet de faire évoluer lesdites connaissances statistiques à la disposition dudit dispositif noeud. Le dispositif noeud peut en outre activer un mécanisme de surveillance d'évolution des conditions de transmission avec le dispositif noeud parent auquel ledit dispositif noeud est effectivement rattaché. Ces aspects sont décrits ci-après en relation avec la Fig. 6.

La Fig. 5 illustre schématiquement un algorithme, exécuté par au moins un dispositif noeud du réseau de communication (à l'exception du dispositif concentrateur 110), pour implémenter le mécanisme de surveillance calendaire évoqué en relation avec la Fig. 4.

Dans une étape 501, ledit dispositif noeud est en attente d'un événement de réveil du mécanisme de surveillance calendaire. Le temps étant découpé en périodes calendaire, ledit mécanisme de surveillance calendaire est ainsi réveillé pour chaque basculement vers une nouvelle période calendaire. Lorsque l'événement de réveil est reçu, une étape 502 est effectuée.

Dans l'étape 502, ledit dispositif noeud obtient une référence calendaire représentative de ladite nouvelle période calendaire. Ladite référence calendaire est étroitement liée à la manière selon laquelle sont organisées les connaissances statistiques utiles audit dispositif noeud pour déterminer si ledit dispositif noeud doit procéder, pour ladite période calendaire, à un changement volontaire de rattachement au sein du réseau de communication 121.

Selon un premier exemple, chaque jour est décomposé en tranches horaires (*e.g.* d'une heure), chaque tranche horaire de la journée représente une période calendaire, et les tranches horaires se répètent d'un jour à l'autre. Les connaissances statistiques sont alors organisées par tranche horaire, et sont donc applicables indépendamment du jour auquel appartient ladite tranche horaire. La référence calendaire obtenue alors à l'étape 502 est représentative de la tranche horaire en cours, ou préférentiellement à venir, au moment où l'événement de réveil est reçu par ledit dispositif noeud à l'étape 501, indépendamment du jour auquel appartient ladite tranche horaire.

Selon un second exemple, chaque semaine est décomposée en jours, chaque jour est décomposé en tranches horaires (*e.g.* d'une heure), chaque tranche horaire de la journée représente une période calendaire, et les tranches horaires peuvent différer d'un jour à l'autre (*e.g.* pour permettre de différencier des comportements distincts les week-ends par rapport aux autres jours). Les connaissances statistiques sont alors organisées par jour de la semaine et par tranche horaire, et sont donc applicables indépendamment de la semaine à laquelle appartient ladite tranche horaire. La référence calendaire obtenue alors à l'étape 502 est représentative de la tranche horaire en cours, ou préférentiellement à venir, et du jour de ladite tranche horaire, au moment où l'événement de réveil est reçu par ledit dispositif noeud à l'étape 501.

Selon un troisième exemple, chaque année est décomposée en semaines, chaque semaine est décomposée en jours, chaque jour est décomposé en tranches horaires (*e.g.* d'une heure), chaque tranche horaire de la journée représente une période calendaire, et les tranches horaires peuvent différer d'un jour à l'autre et d'une semaine à l'autre (*e.g.* pour permettre de différencier des comportements distincts les week-ends ou jours fériés par rapport aux autres jours et des comportements distincts certaines semaines par rapport aux autres semaines). Les connaissances statistiques sont alors organisées par semaine, par jour de la semaine et par tranche horaire, et sont donc applicables indépendamment de l'année à laquelle appartient ladite tranche horaire. La référence calendaire obtenue alors à l'étape 502 est représentative de la tranche horaire en cours, ou préférentiellement à venir, et du jour et de la semaine de ladite tranche horaire, au moment où l'événement de réveil est reçu par ledit dispositif noeud à l'étape 501.

Dans une étape 503 suivante, ledit dispositif noeud obtient des données statistiques relatives à la référence calendaire obtenue à l'étape 502. Ledit dispositif noeud extrait ainsi, à partir des connaissances statistiques à sa disposition, les données statistiques correspondant à la référence calendaire obtenue à l'étape 502.

Dans une étape 504 suivante, ledit dispositif noeud vérifie si, d'après les données statistiques obtenues à l'étape 503, la liaison avec le dispositif noeud parent auquel ledit dispositif noeud est rattaché est susceptible d'accuser pendant ladite nouvelle période calendaire des perturbations supérieures à un seuil prédéfini au-delà duquel ledit dispositif noeud considère préférable de chercher un autre dispositif noeud auquel se rattacher et de demander un changement volontaire de rattachement au sein du réseau de communication 121. Si de telles perturbations sont envisagées, une étape 505 est effectuée ; sinon, l'étape 501 est effectuée à nouveau.

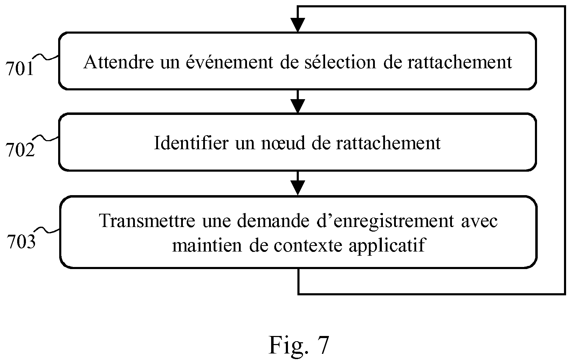

Dans l'étape 505, ledit dispositif noeud génère un événement de sélection de rattachement. Un tel événement déclenche l'exécution de l'algorithme de la Fig. 7, tel que décrit ci-après. Ensuite, l'étape 501 est effectuée à nouveau.

La Fig. 6 illustre schématiquement un algorithme, exécuté par au moins un dispositif noeud du réseau de communication (à l'exception du dispositif concentrateur 110), pour collecter des données statistiques utilisées ensuite dans le cadre du mécanisme de surveillance calendaire décrit ci-dessus en relation avec la Fig. 5.

Dans une étape 601, ledit dispositif noeud obtient des informations de qualité de transmission avec ses dispositifs noeuds voisins. Lesdites informations de qualité sont préférentiellement relatives à des transmissions bidirectionnelles entre ledit dispositif noeud et ses dispositifs noeuds voisins.

Les informations de qualité de transmission avec lesdits dispositifs noeuds voisins peuvent être obtenues de manière passive, en analysant la qualité de réception de messages transmis par d'autres dispositifs noeuds du réseau de communication 121 et reçus par ledit dispositif noeud. Cela ne permet cependant pas d'obtenir des informations de qualité relatives à des transmissions bidirectionnelles entre ledit dispositif noeud et ses dispositifs noeuds voisins. Une démarche active à base d'échanges de messages entre ledit dispositif noeud et lesdits dispositifs noeuds voisins peut alors être mise en place, comme décrit ci-après.

Par exemple, ledit dispositif noeud obtient des premières informations de qualité de réception (*e.g.* de rapport signal-à-bruit SNR) et de niveau de réception RX_LV de la part d'un dispositif noeud voisin. Lesdites premières informations de qualité de réception et de niveau de réception RX_LV sont relatives à des signaux émis par ledit dispositif noeud et reçus par ledit dispositif noeud voisin. Lesdites premières informations de qualité de réception et de niveau de réception RX_LV sont obtenues de la part dudit dispositif noeud voisin par échange de messages LSE_REQ et LSE_RSP, où LSE_REQ est une requête pour obtenir de telles informations de qualité de réception et LSE_RSP est la réponse correspondante. Ensuite, le dispositif noeud obtient des secondes informations de qualité de réception (*e.g.* de rapport signal-à-bruit SNR) et de niveau de réception RX_LV complémentaires auxdites premières informations de qualité de réception et de niveau de réception RX_LV. Lesdites secondes informations de qualité de réception et de niveau de réception RX_LV sont relatives à des signaux émis par ledit dispositif noeud voisin et reçus par ledit dispositif noeud. Lesdites secondes informations de qualité de réception et de niveau de réception RX_LV sont complémentaires auxdites premières informations de qualité de réception et de niveau de réception RX_LV, dans le sens où lesdites premières et secondes informations de qualité de réception et de niveau de réception RX_LV permettent conjointement de déterminer les conditions de transmission bidirectionnelle entre ledit dispositif noeud et ledit dispositif noeud voisin.

Le format des messages LSE_REQ et LSE_RSP peut suivre globalement les spécifications PRIME. Selon les spécifications PRIME, chaque message comporte un champ dénommé PKT.CTYPE indiquant le type dudit message. Les spécifications PRIME définissent actuellement dix types de messages (ou paquets) respectivement représentés par les valeurs 1 à 10 (en décimal). Un nouveau type de message, LSE, peut ainsi être défini, le type LSE recouvrant les requêtes LSE_REQ et les réponses LSE RSP. La distinction entre requêtes LSE_REQ et réponses LSE_RSP peut alors être faite grâce à un bit dédié dans les données utiles (bit à « 0 » dans le cas d'une requête LSE_REQ et bit à « 1 » dans le cas d'une réponse LSE_RSP). Les champs PKT.LNID et PKT.SID définis par les spécifications PRIME permettent d'indiquer un identifiant du dispositif noeud destinataire du message. Un champ LSE.EUI48 décrit ci-après est alors utilisé pour identifier le dispositif noeud ayant transmis la requête LSE_REQ considérée ou en réponse de laquelle la réponse LSE_RSP considérée a été générée. Un nouveau champ, dénommé LSE.SNR, peut être défini pour fournir une information de qualité de réception de type rapport signal-à-bruit SNR et un autre nouveau champ, dénommé LSE.RX LV, peut être défini pour fournir une information de niveau de réception RX_LV.

Une valeur de rapport signal-à-bruit SNR inférieure à un seuil prédéfini et/ou un niveau de réception RX_LV inférieur à un seuil prédéfini correspondent alors à des perturbations supérieures à un seuil prédéfini au-delà duquel ledit dispositif noeud considère qu'il est préférable de ne pas utiliser le dispositif noeud correspondant comme dispositif noeud parent.

Dans une étape 602 suivante, ledit dispositif noeud obtient une référence calendaire représentative d'une période calendaire à laquelle les informations de qualité de transmission obtenues à l'étape 601 se réfèrent.

Dans une étape 603 suivante, ledit dispositif noeud met à jour les données statistiques, pour la référence calendaire obtenue à l'étape 602, avec les informations de qualité de transmission qui ont été obtenues à l'étape 601.

Les étapes 601, 602 et 603 correspondent au mécanisme d'analyse de qualité de transmission entre ledit dispositif noeud et ses dispositifs noeuds voisins. Comme indiqué en relation avec la Fig. 4, ledit dispositif noeud peut en outre s'appuyer sur un mécanisme optionnel de surveillance d'évolution des conditions de transmission avec le dispositif noeud parent auquel ledit dispositif noeud est effectivement rattaché. Ce mécanisme optionnel est décrit ci-après en relation avec des étapes 604 et 605. Lorsque ledit dispositif noeud n'implémente pas de tel mécanisme de surveillance d'évolution des conditions de transmission avec le dispositif noeud parent auquel ledit dispositif noeud est effectivement rattaché, l'étape 601 est à nouveau effectuée ; sinon, l'étape 604 est effectuée.

Dans l'étape 604, ledit dispositif noeud vérifie si, d'après les informations de qualité de transmission obtenues à l'étape 601, la liaison avec le dispositif noeud parent auquel ledit dispositif noeud est rattaché est susceptible d'accuser des perturbations supérieures au seuil prédéfini au-delà duquel ledit dispositif noeud considère préférable de chercher un autre dispositif noeud auquel se rattacher et de demander un changement volontaire de rattachement au sein du réseau de communication 121. Dans une variante de réalisation, ledit dispositif noeud vérifie si, d'après l'évolution des informations de qualité de transmission obtenues à l'étape 601, la liaison avec le dispositif noeud parent auquel ledit dispositif noeud est rattaché accuse des perturbations dont la pente est supérieure à un seuil positif prédéfini au-delà duquel ledit dispositif noeud considère préférable de chercher un autre dispositif noeud auquel se rattacher et de demander un changement volontaire de rattachement au sein du réseau de communication 121. Si de telles perturbations sont envisagées, une étape 605 est effectuée ; sinon, l'étape 601 est effectuée à nouveau.

Dans l'étape 605, ledit dispositif noeud génère un événement de sélection de rattachement. Un tel événement déclenche l'exécution de l'algorithme de la Fig. 7, tel que décrit ci-après. Ensuite, l'étape 601 est effectuée à nouveau.

La Fig. 7 illustre schématiquement un algorithme, exécuté par au moins un dispositif noeud du réseau de communication (à l'exception du dispositif concentrateur 110), pour traiter un événement de sélection de rattachement au sein du réseau de communication 121.

Dans une étape 701, ledit dispositif noeud est en attente d'un événement de sélection de rattachement au sein du réseau de communication 121. Lorsque l'événement de sélection de rattachement au sein du réseau de communication 121 est reçu, une étape 702 est effectuée.

Dans l'étape 702 suivante, ledit dispositif noeud identifie un dispositif noeud parent auquel se rattacher, en fonction d'informations de qualité de transmission entre ledit dispositif noeud et ses dispositifs noeuds voisins.

Selon un premier mode de réalisation, ledit dispositif noeud sélectionne le dispositif noeud éligible comme parent pour lequel les informations de qualité de transmission avec ledit premier dispositif noeud montrent la meilleure qualité de transmission parmi les informations de qualité de transmission à disposition dans lesdites connaissances statistiques pour la période calendaire considérée.

Selon un second mode de réalisation, ledit dispositif noeud sélectionne le dispositif noeud éligible comme parent pour lequel les informations de qualité de transmission avec ledit premier dispositif noeud montrent la meilleure qualité de transmission parmi les informations de qualité de transmission les plus récentes vis-à-vis desdits seconds dispositifs noeuds.

Selon un mode de réalisation particulier, ledit dispositif noeud compare chaque information de niveau de réception RX_LV, obtenue vis-à-vis de chacun desdits dispositifs noeuds voisins, avec un seuil prédéfini RX_LV_OK. Le seuil prédéfini RX_LV_OK, exprimé en dBµV (décibels-microvolts), est un seuil de niveau de réception en dessous duquel il est considéré que la transmission concernée présente des risques non acceptables d'échec. Par exemple, le seuil prédéfini RX_LV_OK est fixé à 75 dBµV (décibels-microvolts). Ledit dispositif noeud part donc d'une liste de dispositifs noeuds parents potentiels (*i.e*. les dispositifs noeuds voisins dudit dispositif noeud), incluant le dispositif parent auquel ledit dispositif noeud est actuellement rattaché et chaque dispositif noeud éligible comme parent ayant transmis une réponse LSE_RSP. Ledit dispositif noeud exclut ensuite de la liste chaque dispositif noeud parent, actuel ou potentiel, si le niveau de réception RX_LV par ledit dispositif noeud parent actuel ou potentiel de signaux émis par ledit dispositif noeud est inférieur au seuil prédéfini RX_LV_OK et/ou si le niveau de réception RX_LV par ledit dispositif noeud de signaux émis par ledit dispositif noeud parent actuel ou potentiel est inférieur au seuil prédéfini RX_LV_OK. Ensuite, le dispositif noeud détermine, pour chaque dispositif noeud restant comme dispositif noeud parent possible, le minimum MIN_Q_RX entre la qualité de réception par ledit dispositif noeud parent actuel ou potentiel de signaux émis par ledit dispositif noeud et la qualité de réception par ledit dispositif noeud de signaux émis par ledit dispositif noeud parent actuel ou potentiel. Ensuite, ledit dispositif noeud sélectionne, parmi les dispositifs noeuds restant comme dispositifs noeuds parents possibles, le dispositif noeud montrant la valeur MIN_Q_RX la plus élevée. Il convient de noter que, outre un rapport signal-à-bruit SNR, l'information de qualité de réception peut aussi correspondre à un taux de réussite trame (égal à «1- taux d'erreur trame»). Le minimum MIN_Q_RX est alors déterminé, pour chaque dispositif noeud parent éligible, en prenant le minimum entre le taux de réussite trame pour les trames émises par ledit dispositif noeud parent éligible et reçues par ledit dispositif noeud, et le taux de réussite trame sur les trames émises par ledit dispositif noeud et reçues par ledit dispositif noeud parent éligible.

Dans une étape 703 suivante, lorsque le dispositif noeud parent identifié à l'étape 703 est différent du dispositif noeud parent actuel, ledit dispositif noeud transmet une demande de réenregistrement au sein du réseau de communication 121 avec maintien du contexte applicatif précédemment créé par le dispositif concentrateur 110 pour ledit dispositif noeud. Ainsi, contrairement à une déconnexion suivie d'une reconnexion dudit dispositif noeud vis-à-vis du réseau de communication 121, le temps de basculement de rattachement d'un dispositif noeud parent à un autre dispositif noeud parent est réduit. A noter que la sélection du nouveau dispositif noeud parent s'effectue substantiellement au basculement vers la nouvelle période calendaire.

Dans un mode de réalisation particulier, la demande de réenregistrement envoyée à l'étape 703 a le même format que la demande d'enregistrement envoyée à l'étape 303, un champ permettant toutefois de préciser si le message correspond à une demande d'enregistrement ou à une demande de réenregistrement. Par exemple, la demande de réenregistrement est un message (ou paquet) REG tel que défini dans les paquets de niveau MAC (« Medium Access Control » en anglais) des spécifications PRIME, dans lequel le bit de vagabondage (« roaming » en anglais) noté REG.R prend la valeur « 1 », alors que ledit bit de vagabondage prend la valeur « 0 » dans le cas d'une demande d'enregistrement. Ledit dispositif noeud indique alors, dans le champ PKT.SID de l'entête de niveau MAC selon les spécifications PRIME, un identifiant du dispositif noeud parent auquel ledit dispositif noeud souhaite être rattaché. La demande de réenregistrement est propagée jusqu'au dispositif concentrateur 110 et est traitée par le dispositif concentrateur 110 comme une demande d'enregistrement, sauf que le contexte applicatif associé audit dispositif noeud est conservé.

## Revendications

1. Procédé pour sélectionner un dispositif noeud parent dans un réseau de communication (121) sous forme d'arbre implémenté sur un réseau d'alimentation électrique, des dispositifs noeuds (130, 131, 135) pouvant être relais entre un dispositif noeud racine de l'arbre (110) et d'autres dispositifs noeuds qui leur sont respectivement rattachés,
**caractérisé en ce qu'**au moins un premier dispositif noeud (137) obtient (503, 603) des connaissances statistiques de qualité de transmission entre ledit premier dispositif noeud et chaque second dispositif noeud pouvant prendre un rôle de dispositif noeud parent pour ledit premier dispositif noeud, lesdites connaissances statistiques étant organisées selon une découpe du temps en périodes calendaires ;
et **en ce que** ledit premier dispositif noeud implémente un mécanisme de surveillance calendaire de telle sorte que, pour chaque basculement vers une nouvelle période calendaire, ledit premier dispositif noeud effectue les étapes suivantes :
- vérifier (504), en fonction des données statistiques obtenues, si des perturbations de transmission au-delà d'un premier seuil prédéfini sont envisagées entre ledit premier dispositif noeud et le dispositif noeud parent auquel ledit premier dispositif noeud est rattaché dans ledit réseau de communication ; et
- sélectionner (702, 703), en cas de vérification positive, un autre dispositif noeud parent auquel rattacher ledit premier dispositif noeud pour ladite nouvelle période calendaire,
et **en ce que** ledit premier dispositif noeud débraye (305) le mécanisme de surveillance calendaire lorsque ledit premier dispositif noeud est un dit noeud relais.

2. Procédé selon la revendication 1, **caractérisé en ce que** ledit premier dispositif noeud obtient lesdites connaissances statistiques en collectant (603), au fil desdites périodes calendaires, des informations de qualité de transmission entre ledit premier dispositif noeud et chaque second dispositif noeud pouvant prendre un rôle de dispositif noeud parent pour ledit premier dispositif noeud au sein du réseau de communication.

3. Procédé selon l'une quelconque des revendications 1 et 2, **caractérisé en ce que** ledit autre dispositif noeud parent est le second dispositif noeud pour lequel les informations de qualité de transmission avec ledit premier dispositif noeud, dans lesdites connaissances statistiques pour ladite nouvelle période calendaire, montrent la meilleure qualité de transmission parmi les informations de qualité de transmission vis-à-vis desdits seconds dispositifs noeuds.

4. Procédé selon l'une quelconque des revendications 1 et 2, **caractérisé en ce que** ledit autre dispositif noeud parent est le second dispositif noeud pour lequel les informations de qualité de transmission avec ledit premier dispositif noeud montrent la meilleure qualité de transmission parmi les informations de qualité de transmission les plus récentes vis-à-vis desdits seconds dispositifs noeuds.

5. Procédé selon l'une quelconque des revendications 3 et 4, **caractérisé en ce que** les informations de qualité de transmission sont des information de niveau de réception de signaux et des informations de qualité de réception de signaux, et ledit premier dispositif noeud effectue les étapes suivantes :
- comparer chaque information de niveau de réception, obtenue vis-à-vis de chacun desdits seconds dispositifs noeuds, avec un second seuil prédéfini ;
- exclure, d'une liste de dispositifs noeuds parents possibles, chaque second dispositif noeud pour lequel le niveau de réception par ledit second dispositif noeud de signaux émis par le premier dispositif noeud est inférieur au second seuil prédéfini et/ou pour lequel le niveau de réception par le premier dispositif noeud de signaux émis par ledit second dispositif noeud est inférieur au second seuil prédéfini ;
- déterminer, pour chaque second dispositif noeud restant dans ladite liste, le minimum MIN_Q_RX entre la qualité de réception par ledit second dispositif noeud desdits signaux émis par le premier dispositif noeud et la qualité de réception par le premier dispositif noeud de signaux émis par ledit second dispositif noeud ; et
- sélectionner comme autre dispositif noeud parent, parmi les seconds dispositifs noeuds restant dans ladite liste, le second dispositif noeud montrant la valeur MIN_Q_RX la plus élevée.

6. Procédé selon l'une quelconque des revendications 1 à 5, **caractérisé en ce que** le premier dispositif noeud implémente en outre un mécanisme de surveillance d'évolution des conditions de transmission avec le dispositif noeud parent auquel ledit dispositif noeud est rattaché ;
- vérifier (604), en fonction de l'évolution des conditions de transmission avec le dispositif noeud parent auquel ledit dispositif noeud est rattaché, si des perturbations de transmission au-delà d'un premier seuil prédéfini surviennent entre ledit premier dispositif noeud et le dispositif noeud parent auquel ledit premier dispositif noeud est rattaché ; et
- sélectionner (703), en cas de vérification positive, un autre dispositif noeud parent auquel rattacher ledit premier dispositif noeud.

7. Procédé selon la revendication 6, **caractérisé en ce que** le mécanisme de surveillance d'évolution des conditions de transmission avec le dispositif noeud parent auquel ledit dispositif noeud est rattaché vérifie si la pente de l'évolution de perturbations entre ledit premier dispositif noeud et le dispositif noeud parent auquel ledit premier dispositif noeud est rattaché est supérieure à un troisième seuil, positif, prédéfini.

8. Procédé selon l'une quelconque des revendications 1 à 7, **caractérisé en ce que** le premier dispositif noeud sélectionne ledit autre dispositif noeud parent en envoyant (703) une demande de réenregistrement dans ledit réseau de communication, ladite demande de réenregistrement ayant le même format qu'une demande d'enregistrement dans ledit réseau de communication envoyée lorsque le premier dispositif noeud est déconnecté du réseau de communication et cherche à s'y reconnecter, un champ permettant toutefois de préciser si la demande correspond à une demande d'enregistrement ou à une demande de réenregistrement.

9. Procédé selon la revendication 8, **caractérisé en ce que** la demande de réenregistrement est un paquet de type REG conformément aux spécifications PRIME dont le bit de vagabondage REG.R précise si la demande correspond à une demande d'enregistrement ou à une demande de réenregistrement.

10. Dispositif noeud (137), dit premier dispositif noeud, adapté pour sélectionner un dispositif noeud parent dans un réseau de communication (121) sous forme d'arbre implémenté sur un réseau d'alimentation électrique, des dispositifs noeuds (130, 131, 135) pouvant être relais entre un dispositif noeud racine de l'arbre (110) et d'autres dispositifs noeuds qui leur sont respectivement rattachés dans ledit réseau de communication,
**caractérisé en ce que** le premier dispositif noeud comporte des moyens pour obtenir (503, 603) des connaissances statistiques de qualité de transmission entre ledit premier dispositif noeud et chaque second dispositif noeud pouvant prendre un rôle de dispositif noeud parent pour ledit premier dispositif noeud, lesdites connaissances statistiques étant organisées selon une découpe du temps en périodes calendaires ;
et **en ce que** ledit premier dispositif noeud implémente un mécanisme de surveillance calendaire de telle sorte que, pour chaque basculement vers une nouvelle période calendaire, ledit premier dispositif noeud implémente :
- des moyens pour vérifier (504), en fonction des données statistiques obtenues, si des perturbations de transmission au-delà d'un premier seuil prédéfini sont envisagées entre ledit premier dispositif noeud et le dispositif noeud parent auquel ledit premier dispositif noeud est rattaché ; et
- des moyens pour sélectionner (702, 703), en cas de vérification positive, un autre dispositif noeud parent auquel rattacher ledit premier dispositif noeud pour ladite nouvelle période calendaire,
et **en ce que** ledit premier dispositif noeud comprend des moyens pour débrayer (305) le mécanisme de surveillance calendaire lorsque ledit premier dispositif noeud est un dit noeud relais.

11. Programme d'ordinateur, **caractérisé en ce qu'**il comprend des instructions pour mettre en oeuvre, par un dispositif noeud, toutes les étapes du procédé selon l'une quelconque des revendications 1 à 9, lorsque ledit programme est exécuté par un processeur dudit dispositif noeud.

12. Moyens de stockage, **caractérisés en ce qu'**ils stockent un programme d'ordinateur comprenant des instructions pour mettre en oeuvre, par un dispositif noeud, toutes les étapes du procédé selon l'une quelconque des revendications 1 à 9, lorsque ledit programme est exécuté par un processeur dudit dispositif noeud.

## Patentansprüche

1. Verfahren zur Auswahl einer Elternknotenvorrichtung in einem baumförmigen Kommunikationsnetz (121), das in einem elektrischen Versorgungsnetz implementiert ist, wobei Knotenvorrichtungen (130, 131, 135) Relais zwischen einer Wurzelknotenvorrichtung des Baums (110) und weiteren Knotenvorrichtungen, die ihnen jeweils angeschlossen sind, sein können,
**dadurch gekennzeichnet, dass** mindestens eine erste Knotenvorrichtung (137) statistische Kenntnisse einer Übertragungsqualität zwischen der ersten Knotenvorrichtung und jeder zweiten Knotenvorrichtung, die eine Rolle einer Elternknotenvorrichtung für die erste Knotenvorrichtung annehmen kann, erhält (503, 603), wobei die statistischen Kenntnisse nach einem Zeitausschnitt in Kalenderperioden organisiert sind;
und dass die erste Knotenvorrichtung einen kalendarischen Überwachungsmechanismus implementiert, so dass für jedes Kippen in eine neue Kalenderperiode die erste Knotenvorrichtung die folgenden Schritte ausführt:
- in Abhängigkeit von den erhaltenen statistischen Daten Überprüfung (504), ob Übertragungsstörungen über eine erste vordefinierte Schwelle hinaus zwischen der ersten Knotenvorrichtung und der Elternknotenvorrichtung, an die die erste Knotenvorrichtung in dem Kommunikationsnetz angeschlossen ist, vorgesehen sind; und
- im Falle einer positiven Überprüfung Auswahl (702, 703) einer weiteren Elternknotenvorrichtung, an die die erste Knotenvorrichtung für die neue Kalenderperiode angeschlossen wird,
und dass die erste Knotenvorrichtung den kalendarischen Überwachungsmechanismus ausschaltet (305), wenn die erste Knotenvorrichtung ein so genannter Relaisknoten ist.

2. Verfahren nach Anspruch 1, **dadurch gekennzeichnet, dass** die erste Knotenvorrichtung die statistischen Kenntnisse erhält, indem sie im Laufe der Kalenderperioden Informationen zur Übertragungsqualität zwischen der ersten Knotenvorrichtung und jeder zweiten Knotenvorrichtung, die eine Rolle einer Elternknotenvorrichtung für die erste Knotenvorrichtung innerhalb des Kommunikationsnetzes annehmen kann, sammelt (603).

3. Verfahren nach einem der Ansprüche 1 und 2, **dadurch gekennzeichnet, dass** die weitere Elternknotenvorrichtung die zweite Knotenvorrichtung ist, für die die Informationen zur Übertragungsqualität mit der ersten Knotenvorrichtung in den statistischen Kenntnissen für die neue Kalenderperiode die bessere Übertragungsqualität unter den Informationen zur Übertragungsqualität gegenüber den zweiten Knotenvorrichtungen zeigen.

4. Verfahren nach einem der Ansprüche 1 und 2, **dadurch gekennzeichnet, dass** die weitere Elternknotenvorrichtung die zweite Knotenvorrichtung ist, für die die Informationen zur Übertragungsqualität mit der ersten Knotenvorrichtung die bessere Übertragungsqualität unter den neuesten Informationen zur Übertragungsqualität gegenüber den zweiten Knotenvorrichtungen zeigen.

5. Verfahren nach einem der Ansprüche 3 und 4, **dadurch gekennzeichnet, dass** die Informationen zur Übertragungsqualität Informationen zu einem Empfangsniveau von Signalen und Informationen zu einer Empfangsqualität von Signalen sind, und wobei die erste Knotenvorrichtung die folgenden Schritte ausführt:
- Vergleichen jeder Information zu einem Empfangsniveau, die gegenüber jeder der zweiten Knotenvorrichtungen erhalten wird, mit einer zweiten vordefinierten Schwelle;
- Ausschließen aus einer Liste von möglichen Elternknotenvorrichtungen jeder zweiten Knotenvorrichtung, für die das Empfangsniveau von von der ersten Knotenvorrichtung gesandten Signalen durch die zweite Knotenvorrichtung niedriger als die zweite vordefinierte Schwelle ist, und/oder für die das Empfangsniveau von von der zweiten Knotenvorrichtung gesandten Signalen durch die erste Knotenvorrichtung niedriger als die zweite vordefinierte Schwelle ist;
- für jede zweite in der Liste verbleibende Knotenvorrichtung Bestimmen des Minimums MIN_Q_RX zwischen der Empfangsqualität der von der ersten Knotenvorrichtung gesandten Signale durch die zweite Knotenvorrichtung und der Empfangsqualität von von der zweiten Knotenvorrichtung gesandten Signalen durch die erste Knotenvorrichtung; und
- Auswählen der zweiten Knotenvorrichtung, die den höchsten Wert MIN_Q_RX zeigt, unter den zweiten in der Liste verbleibenden Knotenvorrichtungen als weitere Elternknotenvorrichtung.

6. Verfahren nach einem der Ansprüche 1 bis 5, **dadurch gekennzeichnet, dass** die erste Knotenvorrichtung ferner einen Überwachungsmechanismus einer Entwicklung der Übertragungsbedingungen mit der Elternvorrichtung, an die die Knotenvorrichtung angeschlossen ist, implementiert;
- in Abhängigkeit von der Entwicklung der Übertragungsbedingungen mit der Elternknotenvorrichtung, an die die Knotenvorrichtung angeschlossen ist, Überprüfung (604), ob Übertragungsstörungen über eine erste vordefinierte Schwelle hinaus zwischen der ersten Knotenvorrichtung und der Elternknotenvorrichtung, an die die erste Knotenvorrichtung angeschlossen ist, auftreten; und
- im Falle einer positiven Überprüfung Auswahl (703) einer weiteren Elternknotenvorrichtung, an die die erste Knotenvorrichtung anzuschließen ist.

7. Verfahren nach Anspruch 6, **dadurch gekennzeichnet, dass** der Überwachungsmechanismus einer Entwicklung der Übertragungsbedingungen mit der Elternknotenvorrichtung, an die die Knotenvorrichtung angeschlossen ist, überprüft, ob das Gefälle der Entwicklung von Störungen zwischen der ersten Knotenvorrichtung und der Elternknotenvorrichtung, an die die erste Knotenvorrichtung angeschlossen ist, größer als eine vordefinierte dritte positive Schwelle ist.

8. Verfahren nach einem der Ansprüche 1 bis 7, **dadurch gekennzeichnet, dass** die erste Knotenvorrichtung die weitere Elternknotenvorrichtung auswählt, indem sie einen Antrag auf Wiederregistrierung in das Kommunikationsnetz sendet (703), wobei der Antrag auf Wiederregistrierung dasselbe Format wie ein Antrag auf Registrierung in dem Kommunikationsnetz hat, der gesendet wird, wenn die erste Knotenvorrichtung von dem Kommunikationsnetz getrennt ist und versucht, sich wieder an dieses anzuschließen, wobei es ein Feld allerdings ermöglicht, zu präzisieren, ob der Antrag einem Antrag auf Registrierung oder einem Antrag auf Wiederregistrierung entspricht.

9. Verfahren nach Anspruch 8, **dadurch gekennzeichnet, dass** der Antrag auf Wiederregistrierung ein Paket vom Typ REG gemäß den PRIME Spezifikationen ist, wobei das vagabundierende Bit REG.R präzisiert, ob der Antrag einem Antrag auf Registrierung oder einem Antrag auf Wiederregistrierung entspricht.

10. Knotenvorrichtung (137), erste Knotenvorrichtung genannt, die geeignet ist, eine Elternknotenvorrichtung in einem Kommunikationsnetz (121) in Form eines in einem elektrischen Versorgungsnetz implementierten Baums auszuwählen, wobei Knotenvorrichtungen (130, 131, 135) Relais zwischen einer Wurzelknotenvorrichtung des Baums (110) und weiteren Knotenvorrichtungen, die ihnen jeweils angeschlossen sind, in dem Kommunikationsnetz sein können,
**dadurch gekennzeichnet, dass** die erste Knotenvorrichtung Mittel umfasst, um statistische Kenntnisse einer Übertragungsqualität zwischen der ersten Knotenvorrichtung und jeder zweiten Knotenvorrichtung, die eine Rolle einer Elternknotenvorrichtung für die erste Knotenvorrichtung annehmen kann, zu erhalten (503, 603), wobei die statistischen Kenntnisse nach einem Zeitausschnitt in Kalenderperioden organisiert sind;
und dass die erste Knotenvorrichtung einen kalendarischen Überwachungsmechanismus implementiert, so dass für jedes Kippen in eine neue Kalenderperiode die erste Knotenvorrichtung implementiert:
- Mittel, um in Abhängigkeit von den erhaltenen statistischen Daten zu überprüfen (504), ob Übertragungsstörungen über eine erste vordefinierte Schwelle hinaus zwischen der ersten Knotenvorrichtung und der Elternknotenvorrichtung, an die die erste Knotenvorrichtung angeschlossen ist, vorgesehen sind; und
- Mittel, um im Falle einer positiven Überprüfung eine weitere Elternknotenvorrichtung auszuwählen (702, 703), an die die erste Knotenvorrichtung für die neue Kalenderperiode angeschlossen wird,
und dass die erste Knotenvorrichtung Mittel umfasst, um den kalendarischen Überwachungsmechanismus auszuschalten (305), wenn die erste Knotenvorrichtung ein so genannter Relaisknoten ist.

11. Computerprogramm, **dadurch gekennzeichnet, dass** es Befehle umfasst, um durch eine Knotenvorrichtung alle Schritte des Verfahrens nach einem der Ansprüche 1 bis 9 durchzuführen, wenn das Programm von einem Prozessor der Knotenvorrichtung ausgeführt wird.

12. Speichermittel, **dadurch gekennzeichnet, dass** sie ein Computerprogramm speichern, umfassend Befehle, um durch eine Knotenvorrichtung alle Schritte des Verfahrens nach einem der Ansprüche 1 bis 9 auszuführen, wenn das Programm von einem Prozessor der Knotenvorrichtung ausgeführt wird.

## Claims

1. Method for selecting a parent node device in a communication network (121) in tree form implemented on an electrical supply network, node devices (130, 131, 135) being able to be relays between a root node device of the tree (110) and other node devices which are respectively attached to them,
**characterized in that** at least one first node device (137) obtains (503, 603) statistical knowledge of quality of transmission between the said first node device and each second node device that can take a role of parent node device for the said first node device, the said statistical knowledge being organized according to a splitting of the time into calendar periods;
and **in that** the said first node device implements a calendar monitoring mechanism in such a way that, for each toggling to a new calendar period, the said first node device performs the following steps:
- verifying (504), as a function of the statistical data obtained, whether transmission disturbances beyond a first predefined threshold are envisaged between the said first node device and the parent node device to which the said first node device is attached in the said communication network; and
- selecting (702, 703), in case of positive verification, another parent node device to which to attach the said first node device for the said new calendar period,
and **in that** the said first node device disables (305) the calendar monitoring mechanism when the said first node device is a said relay node.

2. Method according to Claim 1, **characterized in that** the said first node device obtains the said statistical knowledge by collecting (603), during the said calendar periods, information items in respect of quality of transmission between the said first node device and each second node device that can take a role of parent node device for the said first node device within the communication network.

3. Method according to either one of Claims 1 and 2, **characterized in that** the said other parent node device is the second node device for which the information items in respect of quality of transmission with the said first node device, in the said statistical knowledge for the said new calendar period, show the best transmission quality from among the information items in respect of transmission quality in relation to the said second node devices.

4. Method according to either one of Claims 1 and 2, **characterized in that** the said other parent node device is the second node device for which the information items in respect of quality of transmission with the said first node device show the best transmission quality from among the most recent information items in respect of transmission quality in relation to the said second node devices.

5. Method according to either one of Claims 3 and 4, **characterized in that** the information items in respect of quality of transmission are information items in respect of signal reception level and information items in respect of quality of signal reception, and the said first node device performs the following steps:
- comparing each reception level information item, obtained in relation to each of the said second node devices, with a second predefined threshold;
- excluding, from a list of possible parent node devices, each second node device for which the level of reception by the said second node device of signals emitted by the first node device is below the second predefined threshold and/or for which the level of reception by the first node device of signals emitted by the said second node device is below the second predefined threshold;
- determining, for each second node device remaining in the said list, the minimum MIN_Q_RX between the quality of reception by the said second node device of the said signals emitted by the first node device and the quality of reception by the first node device of signals emitted by the said second node device; and
- selecting as other parent node device, from among the second node devices remaining in the said list, the second node device showing the highest value MIN_Q_RX.

6. Method according to any one of Claims 1 to 5, **characterized in that** the first node device furthermore implements a mechanism of evolution monitoring of the conditions of transmission with the parent node device to which the said node device is attached;
- verifying (604), as a function of the evolution of the conditions of transmission with the parent node device to which the said node device is attached, whether transmission disturbances beyond a first predefined threshold occur between the said first node device and the parent node device to which the said first node device is attached; and
- selecting (703), in case of positive verification, another parent node device to which to attach the said first node device.

7. Method according to Claim 6, **characterized in that** the mechanism of evolution monitoring of the conditions of transmission with the parent node device to which the said node device is attached verifies whether the slope of the evolution of disturbances between the said first node device and the parent node device to which the said first node device is attached is above a positive, predefined, third threshold.

8. Method according to any one of Claims 1 to 7, **characterized in that** the first node device selects the said other parent node device by dispatching (703) a request for reregistration in the said communication network, the said reregistration request having the same format as a request for registration in the said communication network dispatched when the first node device is disconnected from the communication network and seeks to reconnect thereto, a field making it possible however to specify whether the request corresponds to a registration request or to a reregistration request.

9. Method according to Claim 8, **characterized in that** the reregistration request is a packet of REG type in accordance with the PRIME specifications whose roaming bit REG.R specifies whether the request corresponds to a registration request or to a reregistration request.

10. Node device (137), termed first node device, adapted to select a parent node device in a communication network (121) in tree form implemented on an electrical supply network, node devices (130, 131, 135) being able to be relays between a root node device of the tree (110) and other node devices which are respectively attached to them in the said communication network,
**characterized in that** the first node device comprises means for obtaining (503, 603) statistical knowledge of quality of transmission between the said first node device and each second node device that can take a role of parent node device for the said first node device, the said statistical knowledge being organized according to a splitting of the time into calendar periods;
and **in that** the said first node device implements a calendar monitoring mechanism in such a way that, for each toggling to a new calendar period, the said first node device implements:
- means for verifying (504), as a function of the statistical data obtained, whether transmission disturbances beyond a first predefined threshold are envisaged between the said first node device and the parent node device to which the said first node device is attached; and
- means for selecting (702, 703), in case of positive verification, another parent node device to which to attach the said first node device for the said new calendar period,
and **in that** the said first node device comprises means for disabling (305) the calendar monitoring mechanism when the said first node device is a said relay node.

11. Computer program, **characterized in that** it comprises instructions for implementing, by a node device, all the steps of the method according to any one of Claims 1 to 9, when the said program is executed by a processor of the said node device.

12. Storage means, **characterized in that** they store a computer program comprising instructions for implementing, by a node device, all the steps of the method according to any one of Claims 1 to 9, when the said program is executed by a processor of the said node device.
